# EUROPEAN PATENT SPECIFICATION

(11) **EP 1 786 938 B1**
(45) Date of publication and mention of the grant of the patent: **03.09.2008**
(21) Application number: 05706954.4
(22) Date of filing: 21.01.2005
(51) Int. Cl.: C22B 1/00

(54) **SALT COMPOSITION TO BE USED WITH MOLTEN MAGNESIUM**
SALZZUSAMMENSETZUNG ZUR VERWENDUNG MIT SCHMELZFLÜSSIGEM MAGNESIUM
COMPOSITION DE SEL DESTINEE A ETRE EMPLOYEE AVEC DU MAGNESIUM FONDU

(30) Priority: 04.06.2004 EP 04013240
(43) Date of publication of application: 23.05.2007
(73) Proprietor: Magontec GmbH, 46240 Bottrop (DE)
(72) Inventor: BAKKE, Per, N-3919 Porsgrunn (NO)
(74) Representative: Schulz, Dirk
(86) International application number: PCT/EP2005/000586
(87) International publication number: WO 2005/118891

(56) References cited:
- GB-A- 652 235
- "Aluminiumrecycling: Vom Vorstoff bis zur fertigen Legierung" 2000, VEREINIGUNG DEUTSCHER SCHMELZHÜTTEN , DÜSSELDORF , XP002327405 ISBN: 3-00-003839-6 page 223; figure 7.42
- DOWNES C J: "Osmotic and activity coefficients for mixtures of potassium chloride and strontium chloride in water at 298.15K" JOURNAL OF CHEMICAL THERMODYNAMICS UK, vol. 6, no. 4, April 1974 (1974-04), pages 317-323, XP002327407 ISSN: 0021-9614
- NOWAKOWSKI JERZY ET AL: "Electrical conductivity of molten NaCl-KCl-SrCl2 mixtures" J CHEM ENG DATA; JOURNAL OF CHEMICAL AND ENGINEERING DATA JAN 1991, vol. 36, no. 1, January 1991 (1991-01), pages 26-28, XP002327408
- BROS, J. P. ET AL: "Estimation of the enthalpy of fusion of eutectic mixtures of molten salts usable for thermal energy storage" REVUE DE PHYSIQUE APPLIQUEE , 14(1), 107-12 CODEN: RPHAAN; ISSN: 0035-1687, 1979, XP009047424

## Description

The invention relates to a salt composition for protecting, refining and/or recycling molten magnesium or magnesium alloys, which at the same time can be used as a fire extinguisher.

New die cast magnesium alloys containing Sr (AJ alloys) and/or Ca (AX alloys) are interesting for high temperature automotive applications for example within the powertrain segment. When working with Sr containing alloys traditional salt of the MgCl2-CaCl2-NaCl system that e.g. is used for melt protection and fire extinguishing cannot be used. This is due to the thermodynamic stability of SrCl2. If an Sr containing alloy is in contact with a salt of this type, Sr in the alloy will react with MgCl2 in the salt phase forming SrCl2, with significant depletion of Sr in the alloy as a result. If all MgCl2 is reacted before the alloy is free of Sr, NaCl2 will be the next to react, causing Na contamination in the alloy. Alloys with Ca behave exactly similar.

Consequently, the present invention relates to a salt composition which is equally or more thermodynamic stable than the known salt compositions and which can be used in combination with the above mentioned alloys, and as a fire extinguisher.

According to the invention this can be achieved by using a salt composition which consist of halogenides of strontium, potassium, cesium or mixtures thereof.

It has been found that these types of salts have advanced properties in the protection, refining and/or recycling of molten magnesium"),or magnesium alloys.

Preferably the salt composition is a chloride and/or fluoride. In a preferred embodiment of the invention the different ions of the salt composition a present in the following amounts :

| | |
|---|---|
| 33 - 47 wt-% | Sr²+ |
| 14 - 38 wt-% | K + |
| 26 - 39 wt-% | Cl- |
| 0,5 - 1,3 wt-% | F- |

More preferably the salt composition consists of :

| | |
|---|---|
| 48 - 75 wt-% | SrCl2 |
| 20 - 45 wt-% | KCl |
| 2 - 6 wt-% | KF, and |
| 0 - 30 wt-% | CsCl |

The binary KCl-SrCl2 salt has several eutectics, the one with lowest melting point, 584oC, at 42.5 at% SrCl2, which corresponds to 66 wt% SrC12. For applications with magnesium alloys compositions close to the eutectic with lowest melting point is beneficial, as it will e.g. protect molten alloy from oxidation at temperatures from the melting point of the salt and upwards.

Addition of BaCl2 and/or CsCl can further reduce the melting temperature of the salt. However, BaCl2 can immediately be excluded due to toxicity. CsCl can be added, but in practice its cost will be prohibitive

### Experiments

SrCl2-KGl salts with a composition close to the 66 wt% SrCl2 eutectic were prepared, solidified and crushed. Ingots of AJ62 (Mg - 6 wt% Al - 2.5 wt% Sr) were melted in two identical steel crucibles simultaneously, and the SrCl2-KGl salt was added for protection. As the AJ62 alloy started to melt before the salt starts melting, some oxidation was observed before the salt started to melt. However, once the salt melted (at 584oG) it completely covered the alloy and stopped the oxidation. It was observed that due to its much higher density some drainage of salt along the crucible walls occurred. Depending on the amount of salt in the cover layer bursting of salt pools at the metal-salt interface could also take place.

To obtain optimum protection, continuous replacement of the salt being drained towards the bottom of the crucible is recommended.

To simulate the situations in recycling furnaces the crucibles were filled 1/3 of salt. the remainder being alloy AJ62. Both systems were kept at 6900C. In one of the furnaces (crucible B) 1 wt% KF was added to modify the SrCl2-KCl salt. In the reference system (crucible A) SrCl2-KCl salt was used without any additions. Both crucibles were stirred violently to ensure intimate salt-metal contact as is the situation in recycling, both with the Hydro Magnesium recycling furnace where superheated. molten salt is sprayed over the alloy in order to melt the alloy and to strip off the oxides covering the alloy parts (or ingots) (ref. US Patent 5.167.700). and in the traditional batchwise recycling where typically 5-15% salt is intimately mixed with the molten alloy to remove the oxides in the alloy. It is an absolute necessity for a recycling process that after the violent mechanical stirring salt and metal quickly separate into two distinct phases, and not in a condition where metal droplets stay in a kind of permanent suspension (emulsion) in the salt phase. The latter condition is often called "fish metal" or "magnesium caviar" and is completely prohibitive for a recycling process. especially in the salt furnace where the salt/metal ratio sometimes is > 1. and thus no metal can be recovered. In these tests it turned out that the violent stirring caused a permanent fish metal in both furnaces. perhaps slightly less pronounced in crucible B. Next. the KF content of the salt in crucible B was increased to 2 wt% by adding pure KF in the right amounts followed by violent stirring.

Once the stirring was terminated in system 8, the salt and metal separated into two distinct phases, with no signs of fish metal. Repeated stirring followed by a quiescent period ("settling") in crucible A resulted in even more pronounced fish metal than before the stirring. The KF content in the salt in crucible 8 was increased to 3 and 6 wt% in two steps. Excellent salt metal separation was observed in both cases right after termination of the stirring. The reference system (crucible A) was stirred in the same way, with no change of the salt metal separation properties. Towards the end of the experiment, 2 wt% of KF was added to system A under violent stirring, and this had an immediate positive effect on the fish metal. Even before the stirring was terminated, salt and metal separated into two distinct phases with no signs of fish metal. From these tests it is obvious that KF additions in the range of 2-6 wt% to the SrCl2-KCl salt has an extremely positive effect on salt-metal separation properties, making this salt an exceptionally good candidate for recycling of alloys containing Sr, Ca and/or rare earth elements (Ce, La, Nd, Pr) as there will be no loss of these elements to the flux.

In another experiment the electrical conductivity of the eutectic SrCl2-KCl flux and reference salt of the MgCl2-CaCl2-NaCl2 type was measured. The reference salt was taken from the salt furnace (described in US patent 4385931) during an arbitrary day of regular production. The results of the conductivity measurements are shown in Fig. 1, showing the electrical conductivity of eutectic
SrCl2-KCl-salt and a reference salt, in which the y-axis is the electrical conductivity and the x-axis is the temperature in DC.

Although the results show some scatter, it is clear that in the temperature range of interest the electrical conductivity of the SrCl2-KCl salt is 2.5 to 3 times higher than the reference salt. This implies that the MgCl2-CaCl2-NaCl2 salt in the salt furnaces and the recycling furnaces can be successfully replaced by the SrCl2-KCI salt if the electrical supply system of the salt furnace is adjusted to take the difference in electrical conductivity into account. This enables processing of for example Sr-containing Mg alloys in this type of equipment.

## Claims

1. Salt composition for protecting, refining and/or recycling molten magnesium or magnesium alloys, **characterised in that** the salt composition consists of: 48 - 75 wt-% SrCl₂, 20 - 45 wt-% KCl, 2 - 6 wt-% KF, and 0 - 30 wt-% CsCl.

2. Salt composition according to claim 2, **characterised in that** the salt composition consists of: 55 -75 wit-% SrCl₂, 25 -45 wt-% KCl, and 2 - 6 wt-% KF.

3. Salt composition according to claim 2, **characterised in that** the salt composition consists of: 60 - 70 wt-% SrCl₂, 30 - 40 Wt- % KCl, and 2 - 6 wt-% KF.

4. Salt composition according to claim 3, **characterised in that** the salt composition consists of: 65 - 67 wt-% SrCl₂, 33 - 35 wt-% KCl, and 2 - 6 wt-% KF.

5. Use of a salt composition according to any of claims 1 to 4 for protecting, refining and/or recycling molten magnesium or magnesium alloys.

## Patentansprüche

1. Salzzusammensetzung zum Schutz, zum Veredeln und/oder zum Recycling von geschmolzenem Magnesium oder Magnesiumlegierungen, **dadurch gekennzeichnet, dass** die Salzzusammensetzung 48 - 75 Gewichts-% SrCl₂, 20 - 45 Gewichts-% KCl, 2 - 6 Gewichts-% KF, und 0 - 30 Gewichts-% CsCl umfasst.

2. Salzzusammensetzung nach Anspruch 1, **dadurch gekennzeichnet, dass** die Salzzusammensetzung 55 - 75 Gewichts-% SrCl₂, 25 - 45 Gewichts-% KCI, und 2 - 6 Gewichts-% KF umfasst.

3. Salzzusammensetzung nach Anspruch 2, **dadurch gekennzeichnet, dass** die Salzzusammensetzung 60 - 70 Gewichts-% SrCl2, 30 - 40 Gewichts- % KCI, und 2 - 6 Gewichts-% KF umfasst.

4. Salzzusammensetzung nach Anspruch 3, **dadurch gekennzeichnet, dass** die Salzzusammensetzung 65 - 67 Gewichts-% SrCl₂, 33 - 35 Gewichts-% KCl, und 2 - 6 Gewichts-% KF umfasst.

5. Verwendung einer Salzzusammensetzung nach einem der Ansprüche 1 bis 4 zum Schutz, zum Veredeln und/oder zum Recycling von geschmolzenem Magnesium oder Magnesiumlegierungen.

## Revendications

1. Composition de sel pour la protéger, raffiner et/ou recycler du magnésium fondu ou d'alliages de magnésium fondus, **caractérisée en ce que** la composition de sel est constituée de : 48 à 75 % en poids de SrCl₂, 20 à 45 % en poids de KCI, 2 à 6 % en poids de KF, et 0 à 30 % en poids de CsCl.

2. Composition de sel selon la revendication 1, **caractérisée en ce que** la composition de sel est constituée de : 55 à 75 % en poids de SrCl₂, 25 à 45 % en poids de KCI, et 2 à 6 % en poids de KF.

3. Composition de sel selon la revendication 2, **caractérisée en ce que** la composition de sel est constituée de : 60 à 70 % en poids de SrCl₂, 30 à 40 % en poids de KCl, et 2 à 6 % en poids de KF.

4. Composition de sel selon la revendication 3, **caractérisée en ce que** la composition de sel est constituée de : 65 à 67 % en poids de SrCl₂, 33 à 35 % en poids de KCI, et 2 à 6 % en poids de KF.

5. Utilisation d'une composition de sel selon l'une quelconque des revendications 1 à 4 pour la protéger, raffiner et/ou recycler du magnésium fondu ou des alliages de magnésium fondus.
